# EUROPEAN PATENT APPLICATION

(11) **EP 2 978 001 A1**
(43) Date of publication of application: **27.01.2016**
(21) Application number: 14770584.2
(22) Date of filing: 20.03.2014
(51) Int. Cl.: H01G 9/20

(54) **DYE-SENSITIZED SOLAR-CELL ELEMENT**

(30) Priority: 21.03.2013 JP 2013058783
(71) Applicant: Zeon Corporation, Tokyo 100-8246 (JP)
(72) Inventor: OHTA Keisuke, Tokyo 100-8246 (JP); HAYANO Shigetaka, Tokyo 100-8246 (JP)
(74) Representative: Vossius & Partner Patentanwälte Rechtsanwälte mbB
(86) International application number: PCT/JP2014/057710
(87) International publication number: WO 2014/148598

(57) **Abstract**

The present invention is a dye-sensitized solar cell element comprising a semiconductor electrode that comprises an electrode substrate, and a metal oxide semiconductor porous film that is provided on the electrode substrate and supports a dye, a counter electrode that is disposed opposite to the semiconductor electrode, and an electrolyte layer that is provided between the semiconductor electrode and the counter electrode, the counter electrode comprising a nano-carbon material, and the electrolyte layer comprising a polyether compound that has a specific onium-structure repeating unit. The present invention makes it possible to provide a dye-sensitized solar cell element that exhibits high photoelectric conversion efficiency as compared with a known dye-sensitized solar cell element.

## Description

### TECHNICAL FIELD

The present invention relates to a dye-sensitized solar cell element. More specifically, the invention relates to a dye-sensitized solar cell element that achieves high photoelectric conversion efficiency.

### BACKGROUND ART

A dye-sensitized solar cell element has been studied in recent years. The dye-sensitized solar cell element has a structure in which a sensitizing dye that absorbs visible light is supported on a semiconductor layer. The dye-sensitized solar cell element has advantages in that it can be produced using inexpensive materials, and the production process is relatively simple, for example. Therefore, it has been desired to put the dye-sensitized solar cell element into practical use.

A dye-sensitized solar cell element has a structure in which an anode (semiconductor electrode) (in which a porous film layer of a metal oxide semiconductor (e.g., titanium oxide) is formed on a transparent base (e.g., glass) on which a transparent conductive film (e.g., ITO) is formed, and a sensitizing dye (e.g., ruthenium-based dye) is adsorbed on the surface of the metal semiconductor (particles)) and a cathode (counter electrode) (in which a catalyst layer is formed on a base (e.g., glass) on which a transparent conductive film (e.g., ITO) is formed) are disposed so that the porous film layer faces the catalyst layer, and an electrolyte layer component (in which an ionic electrolyte (e.g., lithium iodide) and a charge carrier (e.g., iodine) are dissolved) is sealed between the anode and the cathode.

When visible light is applied to the semiconductor electrode, the sensitizing dye molecules are excited through absorption of light. Electrons enter the semiconductor electrode from the sensitizing dye molecules through the metal oxide semiconductor, and electric current is discharged.

The sensitizing dye molecules (oxidant) that have lost electrons receive electrons from the electrolyte (e.g., iodide ions) included in the electrolyte solution (i.e., the sensitizing dye molecules are reduced and regenerated). The oxidized electrolyte ions are reduced by the catalyst layer formed on the surface of the counter electrode (i.e., one cycle is completed). A material that has a bandgap appropriate for electron transfer (with respect to iodide ions) is preferable as the material for forming the catalyst layer of the counter electrode. Platinum is normally used as the material for forming the catalyst layer. The iodide salt and iodine included in the electrolyte solution form I⁻ and I₃⁻ within the electrolyte solution, and function as a charge carrier between the electrodes.

A polar solvent such as methoxyacetonitrile or acetonitrile is normally used as the solvent included in the electrolyte solution.

In recent years, a high-performance dye-sensitized solar cell element has been obtained by utilizing an ionic liquid as the electrolyte. A salt compound that includes an onium cation (i.e., organic cation) and an iodide ion or a triiodide ion (i.e., counter anion) and is liquid at room temperature is used as the ionic liquid.

When the ionic liquid is used as the electrolyte, relatively good basic performance (e.g., photoelectric conversion efficiency) is obtained, but leakage or the like may occur. Leakage or the like may be suppressed by utilizing the ionic liquid and a polymer as the components of the electrolyte layer so that the electrolyte layer is present in a gel state (see Patent Document 1).

However, when the electrolyte layer is present in a gel state, a decrease in ionic mobility and a deterioration in photoelectric conversion efficiency may easily occur.

Patent Documents 2 and 3 disclose using a cationic polymer as the electrolyte. In this case, however, a deterioration in photoelectric conversion efficiency occurs. Therefore, a further improvement in photoelectric conversion efficiency has been desired.

Patent Document 4 discloses using a linear or tubular carbon material (e.g., carbon nanotubes) as the material for forming the catalyst layer of the counter electrode in order to suppress a deterioration in performance with the passage of time.

### RELATED-ART DOCUMENT

### PATENT DOCUMENT

Patent Document 1: JP-A-2004-319197
Patent Document 2: JP-A-2002-246066
Patent Document 3: WO2004/112184
Patent Document 4: JP-A-2008-71605

### SUMMARY OF THE INVENTION

### TECHNICAL PROBLEM

Various studies have been conducted as described above in order to improve each element of a dye-sensitized solar cell element. However, a practical dye-sensitized solar cell element that exhibits sufficient photoelectric conversion efficiency has not been provided yet.

The invention was conceived in view of the above situation. An object of the invention is to provide a dye-sensitized solar cell element that exhibits high photoelectric conversion efficiency as compared with a known dye-sensitized solar cell element.

### SOLUTION TO PROBLEM

The inventors of the invention conducted extensive studies, and found that a dye-sensitized solar cell element that exhibits a high photoelectric conversion efficiency as compared with a known dye-sensitized solar cell element can be obtained by utilizing a counter electrode that includes a nano-carbon material, and utilizing a polyether compound having an onium ion structure as an electrolyte. This finding has led to the completion of the invention.

One aspect of the invention provides the following dye-sensitized solar cell element.

A dye-sensitized solar cell element including a semiconductor electrode that includes an electrode substrate, and a metal oxide semiconductor porous film that is provided on the electrode substrate and supports a dye, a counter electrode that is disposed opposite to the semiconductor electrode, and an electrolyte layer that is provided between the semiconductor electrode and the counter electrode, the counter electrode including a nano-carbon material, and the electrolyte layer including a polyether compound that includes a repeating unit represented by the following formula (1), 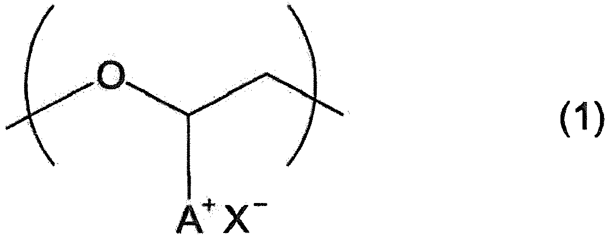 wherein A⁺ is a group having an onium ion structure that includes a cationic nitrogen atom, and X⁻ is a counter anion.

### ADVANTAGEOUS EFFECTS OF THE INVENTION

One aspect of the invention thus provides a dye-sensitized solar cell element that achieves high photoelectric conversion efficiency as compared with a known dye-sensitized solar cell element.

### DESCRIPTION OF EMBODIMENTS

A dye-sensitized solar cell element according to one embodiment of the invention includes a semiconductor electrode that includes an electrode substrate, and a metal oxide semiconductor porous film that is provided on the electrode substrate and supports a dye, a counter electrode that is disposed opposite to the semiconductor electrode, and an electrolyte layer that is provided between the semiconductor electrode and the counter electrode, the counter electrode including a nano-carbon material, and the electrolyte layer including a polyether compound that includes a repeating unit represented by the following formula (1), 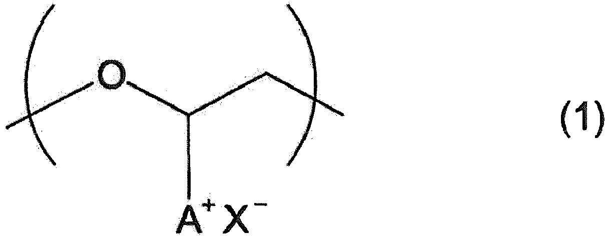
wherein A⁺ is a group having an onium ion structure that includes a cationic nitrogen atom, and X⁻ is a counter anion.
Each element is described in detail below.

### 1) Semiconductor electrode (anode)

The semiconductor electrode used in connection with one embodiment of the invention includes the electrode substrate, and the metal oxide semiconductor porous film that is provided on the electrode substrate and supports the dye. An electrode substrate in which a transparent conductive film is formed on the surface of a transparent base is normally used as the electrode substrate in order to allow external light to pass through and reach the metal oxide semiconductor porous film that supports the dye.

### Transparent base

A material that allows visible light (i.e., light having a wavelength of about 380 nm to about 810 nm (hereinafter the same)) to pass through may be used as the transparent base. It is preferable that the transparent base have a total light transmittance of 80% or more. A transparent glass sheet (transparent glass), a transparent plastic sheet, a transparent plastic film, or the like may preferably be used as the transparent base. A glass sheet that has been subjected to a surface treatment so as to scatter the incident light, a semi-transparent ground (frosted) glass sheet, a semi-transparent plastic sheet, a semi-transparent plastic film, or the like may also be used.

The thickness of the transparent base is not particularly limited, and is selected taking account of the shape of the solar cell and the usage conditions. When the transparent base is formed of glass, a plastic, or the like, the thickness of the transparent base is set to about 1 mm to about 1 cm taking account of durability during use. When the transparent base is required to exhibit flexibility, and is formed of a plastic film or the like, the thickness of the transparent base is set to about 25 µm to about 1 mm. The transparent base may optionally be subjected to a surface treatment (e.g., a hard-coat surface treatment that improves weatherability).

### Transparent conductive film

A film that allows visible light to pass through, and exhibits electrical conductivity may be used as the transparent conductive film. Examples of a material for forming the transparent conductive film include a metal oxide and a transparent conductive polymer material. Specific examples of a preferable material include fluorine-doped tin oxide (hereinafter may be abbreviated as "FTO"), antimony-doped tin oxide (hereinafter may be abbreviated as "ATO"), indium oxide, ITO, zinc oxide, PEDOT/PSS (poly(3,4-ethylenedioxythiophene)/poly(4-styrenesulfonic acid)), and the like.

An opaque conductive material may also be used as long as the light transmittance of the entire electrode substrate can be increased by utilizing a treatment method that disperses and supports a conductive material, or forming a conductive material in the shape of a thin line (e.g., mesh) on the transparent base, for example. Examples of such a conductive material include a carbon material and a metal. The carbon material is not particularly limited. Examples of the carbon material include a nano-carbon material and the like. The metal is not particularly limited. Examples of the metal include platinum, gold, silver, copper, aluminum, nickel, cobalt, chromium, iron, molybdenum, titanium, tantalum, niobium, an alloy thereof, and the like.

When forming the transparent conductive film on the surface of the transparent base using a metal oxide, a sol-gel method, a gas-phase method (e.g., sputtering or CVD), a paste (dispersion) coating method, or the like may be used. When using an opaque conductive material, a method that causes a powdery conductive material or the like to adhere to the surface of the transparent base together with a transparent binder or the like may be used.

The thickness of the transparent conductive film is not particularly limited, and is selected taking account of the electrical conductivity of the material. For example, when using a glass sheet provided with an FTO film, the thickness of the FTO film is 0.01 to 5 µm, and preferably 0.1 to 1 µm. The electrical conductivity required for the transparent conductive film differs depending on the area of the electrode substrate. The transparent conductive film is required to exhibit reduced resistance as the area of the electrode substrate increases. The electrical conductivity of the transparent conductive film is normally 100 Ω/sq. or less, preferably 10 Ω/sq. or less, and more preferably 5 Ω/sq. or less. If the electrical conductivity of the transparent conductive film exceeds 100 Ω/sq., the internal resistance of the solar cell may increase.

### Metal oxide semiconductor porous film that supports dye

A known metal oxide semiconductor may be used as the metal oxide semiconductor that forms the metal oxide semiconductor porous film. Examples of the metal oxide semiconductor include an oxide of a transition metal such as Ti, Nb, Zn, Sn, Zr, Y, La, or Ta; a perovskite-type oxide such as SrTiO₃ and CaTiO₃; and the like. It is preferable to use titanium oxide, zinc oxide, tin oxide, or the like. Among these, titanium dioxide is more preferable, and anatase-type titanium dioxide is particularly preferable.

The metal oxide semiconductor porous film may be formed on the transparent conductive film of the electrode substrate using a known method. The metal oxide semiconductor porous film may be formed using a sol-gel method, a method that applies a paste (dispersion) of metal oxide semiconductor particles, an electrodeposition method, or the like.

It is preferable that the metal oxide semiconductor porous film have a small number of metal oxide grain boundaries in order to lower the electrical resistivity. It is desirable to form the metal oxide semiconductor porous film by applying and sintering metal oxide semiconductor particles. The sintering conditions may be appropriately selected taking account of the type of the metal oxide semiconductor, the formation method, and the heat-resistant temperature of the electrode substrate.

When using metal oxide semiconductor particles, it is desirable to use metal oxide semiconductor particles that have a particle size over a wide range and easily scatter light in order to increase the amount of light absorbed by the dye.

It is preferable that the metal oxide semiconductor porous film have a specific surface area of 10 to 200 m²/g so that the metal oxide semiconductor porous film can support a large amount of the dye.

An optimum thickness of the metal oxide semiconductor porous film differs depending on the type and the properties of the metal oxide semiconductor. The thickness of the metal oxide semiconductor porous film is preferably 0.1 to 50 µm, and more preferably 5 to 30 µm.

### Dye

The dye (hereinafter may be referred to as "sensitizing dye") is not particularly limited as long as the dye is excited by sunlight, and can inject electrons into the metal oxide semiconductor layer. A dye that is normally used for a dye-sensitized solar cell may be used. It is preferable that the absorption spectrum of the dye overlap the spectrum of sunlight over a wide wavelength range in order to improve the photoelectric conversion efficiency. It is preferable to use a dye that exhibits high light resistance from the viewpoint of durability.

It is preferable to use a ruthenium complex as the dye. It is more preferable to use a ruthenium polypyridine complex, and still more preferably a ruthenium complex represented by Ru(L)(L')(X)₂. Note that L is 4,4'-dicarboxy-2,2'-bipyridine, a quaternary ammonium salt thereof, or a polypyridine-based ligand that includes a carboxyl group, and L' is 4,4'-dicarboxy-2,2'-bipyridine, a quaternary ammonium salt thereof, a polypyridine-based ligand that includes a carboxyl group, or 4,4'-substituted 2,2'-bipyridine. Examples of the substituent that substitutes 2,2'-bipyridine at the 4,4'-position include a long-chain alkyl group (alkyl group having 6 to 20 carbon atoms), an alkyl-substituted vinylthienyl group, an alkyl-substituted or alkoxy-substituted styryl group, a substituted thienyl group (thienyl group derivative), and the like. X is SCN, Cl, or CN. Specific examples of the ruthenium complex represented by Ru(L)(L')(X)₂ include a bis(4,4'-dicarboxy-2,2'-bipyridine)diisothiocyanate ruthenium complex and the like.

A metal complex dye other than a ruthenium complex dye (e.g., iron-complex dye and copper complex dye), an organic dye (e.g., cyanide-based dye, porphyrin-based dye, polyene-based dye, coumarin-based dye, cyanine-based dye, squalirium-based dye, styryl-based dye, and eosin-based dye), or the like may also be used as the dye.

These dyes may be used either alone or in combination.

It is preferable that the dye include a group that is bonded to the metal oxide semiconductor in order to improve the efficiency of injection of electrons into the metal oxide semiconductor. The group that is bonded to the metal oxide semiconductor is not particularly limited. Examples of the group that is bonded to the metal oxide semiconductor include a carboxyl group, a sulfonyl group, and the like.

The dye may be supported on the metal oxide semiconductor using an arbitrary method. For example, the metal oxide semiconductor porous film formed on the transparent conductive film may be immersed in a solution of the dye at room temperature under atmospheric pressure. The immersion time is appropriately adjusted taking account of the type of the metal oxide semiconductor, the type of the dye, the type of the solvent, the dye concentration, and the like so that a monomolecular film of the dye is uniformly formed on the surface of the metal oxide semiconductor. Note that the metal oxide semiconductor porous film may be immersed in a solution of the dye with heating so that the dye is effectively supported on the metal oxide semiconductor.

It is preferable that the molecules of the dye be not associated on the surface of the metal oxide semiconductor. A co-adsorbent may optionally be used when association occurs if the dye is supported on the metal oxide semiconductor alone. An optimum co-adsorbent and an optimum co-adsorbent concentration differ depending on the type of the dye. Examples of the co-adsorbent include an organic carboxylic acid such as deoxycholic acid. For example, the co-adsorbent may be dissolved in the solvent (in which the dye is dissolved) together with the dye, and the metal oxide semiconductor porous film may be immersed in the resulting solution so that the co-adsorbent is adsorbed on the metal oxide semiconductor while the dye is supported on the metal oxide semiconductor.

Examples of the solvent used to dissolve the dye include an alcohol such as ethanol and t-butyl alcohol; a nitrile such as acetonitrile; a ketone such as acetone; an ether such as diethyl ether; a halogenated hydrocarbon such as chloroform; an aliphatic hydrocarbon such as n-hexane; an aromatic hydrocarbon such as benzene; an ester such as ethyl acetate; and the like. It is desirable to appropriately adjust the dye concentration in the solution taking account of the type of the dye and the type of the solvent. The dye concentration in the solution is preferably 5×10⁻⁵ mol/L or more.

### 2. Counter electrode (cathode)

The counter electrode used in connection with one embodiment of the invention includes the nano-carbon material. The counter electrode normally has a structure in which a support base, a conductive layer, and a catalyst layer are sequentially stacked.

### Support base

The support base is not particularly limited. For example, a glass sheet (glass) or a transparent plastic resin sheet may be used as the support base when the support base is required to exhibit transparency. A plastic resin sheet may be used as the support base when the support base is required to have a reduced weight, and a plastic resin film or the like may be used as the support base when the support base is required to exhibit flexibility.

The thickness of the support base is not particularly limited, and is selected taking account of the shape of the counter electrode and the usage conditions. For example, when glass, a plastic, or the like is used as the material for forming the support base, the thickness of the support base is set to about 1 mm to about 1 cm taking account of durability during use. When the support base is required to exhibit flexibility, and is formed of a plastic film or the like, the thickness of the support base is set to about 25 µm to about 1 mm. The support base may optionally be subjected to a hard-coat treatment that improves weatherability, or provided with a film, for example.

### Conductive layer

It is preferable to use a material that exhibits high electrical conductivity as a material for forming the conductive layer in order to reduce the internal resistance of the solar cell.

Examples of such a material include a metal or an alloy (e.g., chromium, nickel, titanium, tantalum, niobium, stainless steel, and aluminum) on which a surface oxide film is formed; a conductive metal oxide (e.g., ITO, FTO, and ATO); and the like.

When forming the conductive layer on the surface of the support base using a metal oxide, a sol-gel method, a gas-phase method (e.g., sputtering or CVD), a paste (dispersion) coating method, or the like may be used. When using an opaque conductive material, a method that causes a powdery conductive material or the like to adhere to the surface of the support base together with a transparent binder or the like may be used.

The thickness of the conductive layer is appropriately selected taking account of the type of the material, the shape of the electrode, and the usage conditions. When the support base can provide a practical strength, the thickness of the conductive layer may be about 100 nm as long as the electrical conductivity required for the electrode can be achieved.

For example, when the conductive layer is formed using a metal or an alloy to have a thickness of about 1 to 10 mm, and can provide a practical strength, the electrode may be formed without using the support base.

The desired electrical conductivity differs depending on the area of the electrode. The conductive layer is required to exhibit reduced resistance as the area of the electrode increases. The electrical conductivity required for the conductive layer is normally 100 Ω/sq. or less, preferably 5 Ω/sq. or less, and more preferably 1 Ω/sq. or less. If the electrical conductivity of the conductive layer exceeds 100 Ω/sq., the internal resistance of the solar cell may increase.

### Catalyst layer

A known catalyst layer includes platinum. On the other hand, the catalyst layer used in connection with one embodiment of the invention includes the nano-carbon material.

### Nano-carbon material

The nano-carbon material used in connection with one embodiment of the invention is not particularly limited as long as the nano-carbon material is a carbon material that has catalytic activity that reduces an oxidant of a redox couple. Examples of the nano-carbon material include carbon nanotubes, carbon nanohorns, nanographenes, and the like. Among these, carbon nanotubes (hereinafter may be abbreviated as "CNT") are preferable since excellent photoelectric conversion efficiency can be achieved.

The term "carbon nanotube" refers to a nano-carbon material that has a structure in which a graphene sheet is rolled in a tubular manner. The carbon nanotubes are roughly classified into single-walled carbon nanotubes and multi-walled carbon nanotubes corresponding to the number of walls. The carbon nanotubes are roughly classified into chiral carbon nanotubes, zigzag carbon nanotubes, armchair carbon nanotubes, and the like corresponding to the structure of the graphene sheet.

Arbitrary carbon nanotubes can be used as the nano-carbon material. It is particularly preferable to use single-walled carbon nanotubes obtained using a super-growth method (i.e., single-walled carbon nanotubes that are obtained using the method disclosed in WO2006/011655 and characterized in that the average diameter (Av) and the standard deviation (σ) of the diameter satisfy 0.60>3σ/Av>0.20).

The catalyst layer is normally formed on the conductive layer. The catalyst layer that includes the nano-carbon material may be formed on the conductive layer using a known method. For example, the catalyst layer that includes the nano-carbon material may be formed on the conductive layer using a method that applies a dispersion in which the nano-carbon material is dispersed in a polar solvent (e.g., water or ethanol) to the surface of the conductive layer, and dries the applied dispersion.

The dispersion of the nano-carbon material may include a fluorine-based binder, a carboxymethyl cellulose-based binder, or a polyether-based binder.

Since the catalyst layer that includes the nano-carbon material exhibits catalytic activity and electrical conductivity, the catalyst layer may be provided on the surface of the support base without providing the conductive layer.

### 3. Electrolyte layer

The dye-sensitized solar cell element according to one embodiment of the invention includes the electrolyte layer that is situated between the semiconductor electrode and the counter electrode, and the electrolyte layer includes a polyether compound that includes a repeating unit having a specific structure (hereinafter may be referred to as "specific polyether compound").

The semiconductor electrode and the counter electrode are disposed so that the metal oxide semiconductor porous film that is included in the semiconductor electrode and supports the dye faces the catalyst layer included in the counter electrode.

### Specific polyether compound

The specific polyether compound that is used for the electrolyte layer is a compound that includes a repeating unit represented by the following formula (1) (hereinafter may be referred to as "repeating unit (1)"). 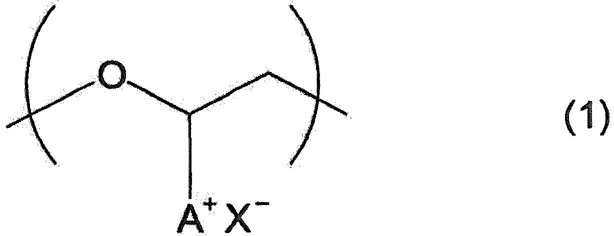 wherein A⁺ is a group having an onium ion structure that includes a cationic nitrogen atom, and X⁻ is a counter anion.

Examples of the onium ion structure that includes a cationic nitrogen atom (see the formula (1)) include a quaternary ammonium ion structure represented by N⁺R¹R²R³ (wherein R¹, R², and R³ are independently an alkyl group having 1 to 20 carbon atoms, an alkenyl group having 2 to 20 carbon atoms, a hydroxyalkyl group having 1 to 20 carbon atoms, or a substituted or unsubstituted phenyl group), such as trimethylammonium, triethylammonium, n-butyldimethylammonium, n-octyldimethylammonium, n-stearyldimethylammonium, tributylammonium, trivinylammonium, triethanolammonium, 1-pyrrolidinium, imidazolium, N,N'-dimethylethanolammonium, tri(2-ethoxyethyl)ammonium, and N,N'-dimethylanilinium; and an onium ion structure that includes a nitrogen-containing heterocyclic ring, such as 1-methylimidazolium, 1-ethylimidazolium, pyridinium, 2,6-dimethylpyridinium, quinolinium, and thiazolium. Among these, an onium ion structure that includes a nitrogen-containing heterocyclic ring is preferable, and an onium ion structure that includes an imidazolium ring structure is more preferable, since excellent photoelectric conversion efficiency can be achieved.

X⁻ in the formula (1) is a counter anion that makes a pair with the onium ion (cation) included in the formula (1). The counter anion is not particularly limited. Specific examples of the counter anion include a halide ion (e.g., Cl⁻, Br⁻, I⁻, and I₃⁻), OH⁻, SCN⁻, BF₄⁻, PF₆⁻, ClO₄⁻, (FSO₂)₂N⁻, (CF₃SO₂)₂N⁻, (CF₃CF₂SO₂)₂N⁻, CH₃SO₃⁻, CF₃SO₃⁻, CF₃COO⁻, PhCOO⁻, and the like. Among these, a halide ion is preferable, and an iodide ion (I⁻) is more preferable, since excellent photoelectric conversion efficiency can be achieved.

The polyether compound used in connection with one embodiment of the invention is not particularly limited as long as the polyether compound includes the repeating unit (1). The polyether compound may include a repeating unit other than the repeating unit (1). The content of the repeating unit (1) in the polyether compound is preferably 1 mol% or more, and more preferably 10 mol% or more, based on the total repeating units. If the content of the repeating unit (1) is too low, a deterioration in photoelectric conversion efficiency may occur.

Examples of the repeating unit other than the repeating unit (1) include a nonionic oxirane monomer unit (i.e., an oxirane monomer unit that does not include a cationic group and an anionic group in the main chain and the side chain). Examples of the nonionic oxirane monomer unit include a nonionic oxirane monomer unit that includes a crosslinkable group and a nonionic oxirane monomer unit that does not include a crosslinkable group.

The crosslinkable group is not particularly limited as long as the crosslinkable group is a group that can form an intermolecular crosslinked structure due to a crosslinking agent, heat, or the like. Examples of the crosslinkable group include an ethylenically carbon-carbon unsaturated bond-containing group (e.g., vinyl group and allyl group).

Examples of the nonionic oxirane monomer unit that includes a crosslinkable group include an ethylenically unsaturated glycidyl ether unit such as a glycidyl methacrylate unit, a glycidyl acrylate unit, a vinyl glycidyl ether unit, and an allyl glycidyl ether unit; a conjugated diene monoepoxide unit such as a butadiene monoepoxide unit and a chloroprene monoepoxide unit; an alkenyl epoxide unit such as a 1,2-epoxy-5-hexene unit; and the like. Among these, an ethylenically unsaturated glycidyl ether unit is preferable from the viewpoint of ease of synthesis of the polyether compound. A glycidyl methacrylate unit, a glycidyl acrylate unit, and an allyl glycidyl ether unit are particularly preferable.

When the polyether compound includes the nonionic oxirane monomer unit that includes a crosslinkable group, the polyether compound forms a crosslinked structure, and prevents volatilization of the solvent from the electrolyte layer, leakage from the electrolyte layer due to breakage of the dye-sensitized solar cell element, and the like.

The content of the nonionic oxirane monomer unit that includes a crosslinkable group in the polyether compound is preferably 1 to 30 mol% based on the total repeating units.

Examples of the nonionic oxirane monomer unit that does not include a crosslinkable group include an oxirane monomer unit that includes an alicyclic structure, such as an alkylene oxide unit (e.g., ethylene oxide unit, propylene oxide unit, and 1,2-epoxybutane unit) and a cyclohexene oxide unit; a glycidyl ether monomer unit that includes an ether chain, such as a methoxyethoxy ethyl glycidyl ether unit; and the like. The content of the nonionic oxirane monomer unit that does not include a crosslinkable group in the polyether compound is preferably 10 to 89 mol% based on the total repeating units.

When the polyether compound includes the nonionic oxirane monomer unit, the polyether compound includes only the repeating unit (1) and the nonionic oxirane monomer unit. In this case, the repeating units may be bonded in a block-wise manner, or may be bonded randomly. It is preferable that the repeating units be bonded randomly.

The number average molecular weight of the polyether compound used in connection with one embodiment of the invention is not particularly limited, but is preferably 1,000 to 1,000,000, and more preferably 1,000 to 200,000. The molecular weight distribution (i.e., the ratio of the weight average molecular weight to the number average molecular weight) of the polyether compound is not particularly limited, but is preferably 1.0 to 4.0, and more preferably 1.0 to 3.0.

The number average molecular weight, the weight average molecular weight, and the molecular weight distribution of the polyether compound refer to polystyrene-equivalent values determined by gel permeation chromatography.

The polyether compound used in connection with one embodiment of the invention may be synthesized using an arbitrary method as long as the desired polyether compound can be obtained. It is preferable to synthesize a polyether compound that includes a halogen group, react an onium compound (e.g., imidazole compound) with the polyether compound to convert the halogen group (halogen atom) into an onium halide group, and convert the halide ion of the onium halide group into an arbitrary anion through an anion-exchange reaction, since the desired polyether compound can be easily obtained. This method is disclosed in JP-A-2012-133786, for example. The anion-exchange reaction may be effected using a normal method. For example, an onium chloride group can be converted into an onium iodide group by bringing an iodide salt into contact with a polyether compound that includes an onium chloride group.

When the polyether compound used in connection with one embodiment of the invention includes a crosslinkable group, a crosslinking agent may be mixed with the polyether compound. The crosslinking agent may be selected taking account of the properties of the crosslinkable group. Examples of the crosslinking agent include sulfur such as powdery sulfur, precipitated sulfur, colloidal sulfur, insoluble sulfur, and highly dispersible sulfur; a sulfur-containing compound such as sulfur monochloride, sulfur dichloride, morpholine disulfide, an alkylphenol disulfide, dibenzothiazyl disulfide, N,N'-dithiobis(hexahydro-2H-azenopin-2), a phosphorus-containing polysulfide, and a polysulfide; an organic peroxide such as dicumyl peroxide and di-t-butyl peroxide; quinonedioxime such as p-quinonedioxime and p,p'-dibenzoylquinonedioxime; a UV crosslinking agent like an alkylphenone-based photoinitiator such as 2-methyl-1-(4-methylthiophenyl)-2-morpholinopropan-1-one; and the like. These crosslinking agents may be used either alone or in combination. The mixing ratio of the crosslinking agent may be appropriately selected.

### Electrolyte layer

The electrolyte layer used in connection with one embodiment of the invention may include only the specific polyether compound. Note that it is preferable that the electrolyte layer also include a solvent from the viewpoint of ion mobility and ease of production of the dye-sensitized solar cell element.

The solvent is not particularly limited as long as the solvent can dissolve the polyether compound and does not impair ion conductivity. A known electrolyte solvent may be used as the solvent.

Examples of the solvent include a nitrile such as acetonitrile, methoxyacetonitrile, methoxypropionitrile, and benzonitrile; a cyclic carbonate such as ethylene carbonate and propylene carbonate; a linear carbonate such as dimethyl carbonate and diethyl carbonate; a lactone such as γ-butyrolactone; an amide such as N,N-dimethylformamide and N-methylpyrrolidone; an ether such as an ethylene glycol dialkyl ether and a propylene glycol dialkyl ether; an alcohol such as an ethylene glycol monoalkyl ether and a propylene glycol monoalkyl ether; a polyhydric alcohol such as ethylene glycol and propylene glycol; a sulfur-containing compound such as dimethyl sulfoxide, sulfolane, and methyl sulfolane; N,N'-dimethylimidazolidinone; N-methyloxazolidinone; and the like. These solvents may be used either alone or in combination.

An optimum polyether compound concentration in the electrolyte layer used in connection with one embodiment of the invention is not necessarily constant since the amount of current generated differs depending on the quantity of incident light and the like when the dye-sensitized solar cell element is used for a solar cell. An appropriate concentration may be specified by the ionic concentration. The term "ionic concentration" used herein in connection with the electrolyte layer refers to the molar concentration of the repeating unit represented by the formula (1) in the electrolyte layer. The ionic concentration is preferably 0.05 mol/L or more, more preferably 0.1 to 4.0 mol/L, and still more preferably 0.3 to 3.0 mol/L. If the ionic concentration is too low, a deterioration in photoelectric conversion efficiency may occur.

The electrolyte layer used in connection with one embodiment of the invention may include an ionic liquid. Examples of the ionic liquid include an ionic liquid in which the cation is an imidazolium-based cation (e.g., 1-methyl-3-methylimidazolium, 1-butyl-3-methylimidazolium, 1-hexyl-3-methylimidazolium, 1-octyl-3-methylimidazolium, 1-methyl-2,3-dimethylimidazolium, 1-butyl-2,3-dimethylimidazoliurn, 1-hexyl-2,3-dimethylimidazolium, or 1-octyl-2,3-dimethylimidazolium), a pyridinium-based cation (e.g., 1-methylpyridinium, 1-butylpyridinium, or 1-hexylpyridinium), a pyrazolium-based cation, or an aliphatic amine-based cation, and the anion is a fluorinated sulfonic acid (e.g., tetrafluoroborate, hexafluoroborate, or trifluoromethanesulfonate), a fluorinated carboxylic acid (e.g., trifluoroacetic acid), thiocyanate, dicyanamide, tetracyanoborate, or a sulfonylimide (e.g., bisfluorosulfonylimide or bistrifluoromethanesulfonylimide). These ionic liquids may be used either alone or in combination.

The electrolyte layer used in connection with one embodiment of the invention may include an additive that can form a redox couple, or an additive that can form a redox couple with the counter anion included in the polyether compound, from the viewpoint of improving the photoelectric conversion efficiency.

A redox couple that is normally used for a dye-sensitized solar cell element may be used as the redox couple as long as the object of the invention is not impaired. For example, an iodine/iodide ion, a bromine/bromide ion, or the like may be used. Specific examples of the redox couple include an iodine/iodide ion pair (e.g., iodine and metal iodide (e.g., LiI, NaI, or KI), iodine and iodide salt of quaternary imidazolium compound, iodine and iodide salt of quaternary pyridinium compound, and iodine and iodide salt of tetraalkylammonium compound); a bromine/bromide ion (e.g., bromine and metal bromide (e.g., LiBr, NaBr, or KBr), bromine and bromide salt of quaternary imidazolium compound, bromine and bromide salt of quaternary pyridinium compound, and bromine and bromide salt of tetraalkylammonium compound); a metal complex (e.g., ferrocyanic acid salt-ferricyanic acid salt and ferrocene-ferricinium salt); a disulphide compound and a mercapto compound; hydroquinone; a quinone; and the like. These redox couples may be used either alone or in combination. Among these, an iodine/iodide ion and a bromine/bromide ion are preferable.

Examples of the additive that can form a redox couple with the counter anion included in the polyether compound include iodine, bromine, and the like.

The electrolyte layer used in connection with one embodiment of the invention may include an inorganic salt and/or an organic salt from the viewpoint of improving a short-circuit current and the photoelectric conversion efficiency.

Examples of the inorganic salt and the organic salt include an alkali metal salt, an alkaline-earth metal salt, and the like. Specific examples of the inorganic salt and the organic salt include lithium iodide, sodium iodide, potassium iodide, magnesium iodide, calcium iodide, lithium trifluoroacetate, sodium trifluoroacetate, lithium thiocyanate, lithium tetrafluoroborate, lithium hexafluorophosphate, lithium perchlorate, lithium trifluoromethanesulfonate, lithium bis(trifluoromethanesulfonyl)imide, a guanidine salt such as guanidine thiocyanate, and the like. These inorganic salts and organic salts may be used either alone or in combination.

The inorganic salt and the organic salt are used in an appropriate amount as long as the object of the invention is not impaired.

The electrolyte layer used in connection with one embodiment of the invention may include pyridine, benzimidazole, and/or derivatives thereof from the viewpoint of improving the open-circuit voltage.

Examples of these compounds include an alkylpyridine such as methylpyridine, ethylpyridine, propylpyridine, and butylpyridine; an alkylimidazole such as methylimidazole, ethylimidazole, and propylimidazole; an alkylbenzimidazole such as methylbenzimidazole, ethylbenzimidazole, butylbenzimidazole, and propylbenzimidazole; and the like. These compounds may be used either alone or in combination.

Pyridine, benzimidazole, and/or derivatives thereof are used in an appropriate amount as long as the object of the invention is not impaired.

The electrolyte layer used in connection with one embodiment of the invention may include microparticles. When the electrolyte layer includes microparticles, the electrolyte layer exhibits thixotropic properties. In this case, the electrolyte layer exhibits solid-like properties, paste-like properties, or gel-like properties within the resulting dye-sensitized solar cell element, and prevents volatilization of the solvent from the electrolyte layer, leakage from the electrolyte layer due to breakage of the dye-sensitized solar cell element, and the like.

The microparticles are not particularly limited. A known material may be used. Examples of the microparticles include an inorganic oxide such as indium oxide, a composite of tin oxide and indium oxide (hereinafter referred to as "ITO"), and silica, a carbon material such as ketjen black, carbon black, and a nano-carbon material, a layered inorganic compound such as kaolinite and montmorillonite, and the like.

The dye-sensitized solar cell element according to one embodiment of the invention has the above configuration. A plurality of dye-sensitized solar cell elements are connected in series and/or in parallel to form a solar cell module.

The number of dye-sensitized solar cell elements is appropriately determined taking account of the application. A non-conductive spacer is provided between the dye-sensitized solar cell elements, and the semiconductor electrode and the counter electrode of each element are connected through a conductive member to obtain a solar cell module.

The structure of the dye-sensitized solar cell element is not particularly limited. The dye-sensitized solar cell element may have a Z-type structure, a W-type structure, an opposite-type structure, a monolithic-type structure, or the like.

### EXAMPLES

The invention is further described below by way of examples and comparative examples. Note that the invention is not limited to the following examples.

### Synthesis of electrolyte (polyether compound 1)

### Production Example A

### Living anionic copolymerization of propylene oxide and epichlorohydrin

A glass reactor equipped with a stirrer (in which the internal atmosphere had been replaced by argon) was charged with 3.22 g of tetra-n-butylammonium bromide (hereinafter abbreviated as "TBAB") and 50 mL of toluene, and the mixture was cooled to 0°C. After the addition of a solution prepared by dissolving 1.370 g (1.2 equivalents based on TBAB) of triethylaluminum in 10 mL of toluene, the mixture was stirred at 0°C for 15 minutes to prepare a catalyst composition. After the addition of 8.0 g of propylene oxide and 2.0 g of epichlorohydrin to the catalyst composition, the mixture was subjected to a polymerization reaction at 0°C. The viscosity of the solution gradually increased after the initiation of the polymerization reaction. After 12 hours had elapsed, a small quantity of isopropyl alcohol was added to the reaction mixture to terminate the reaction. The resulting reaction mixture was washed with a 0.1 N hydrochloric acid aqueous solution to effect deashing (i.e., a catalyst residue was removed), and then washed with ion-exchanged water. The organic layer was dried at 50°C for 12 hours under reduced pressure to obtain 9.9 g of a colorless and transparent oily substance. The oily substance had a number average molecular weight (Mn) (determined by GPC) of 1,500 and a molecular weight distribution (polystyrene-equivalent value) of 1.28. The oily substance was subjected to ¹H-NMR analysis. It was found that the oily substance included 86.4 mol% of a propylene oxide unit and 13.6 mol% of an epichlorohydrin unit. It was thus confirmed that the oily substance was an oligomer including a propylene oxide unit and an epichlorohydrin unit (i.e., a 24-mer consisting of twenty-one propylene oxide units and three epichlorohydrin units (on average)), and including a bromomethyl group at the polymerization-initiation terminal and a hydroxyl group at the polymerization-end terminal.

### Production Example B

### Quaternization of epichlorohydrin unit in copolymer using 1-methylimidazole

A glass reactor equipped with a stirrer (in which the internal atmosphere had been replaced by argon) was charged with 9.0 g of the oligomer obtained in Production Example A and 8.0 g of 1-methylimidazole, and the mixture was reacted at 100°C for 48 hours. The reaction mixture was then cooled to room temperature to terminate the reaction. The resulting reaction product was dried at 50°C for 120 hours under reduced pressure to obtain 10.9 g of a yellowish brown viscous liquid substance. The viscous liquid substance was subjected to ¹H-NMR analysis and elemental analysis. It was found that the viscous liquid substance was a polyether compound obtained by substituting the chloro group of each epichlorohydrin unit included in the oligomer (starting material) with a 1-methylimidazolium chloride group, and substituting the bromo group included in the bromomethyl group at the polymerization-initiation terminal with a 1-methylimidazolium bromide group.

### Production Example C

### Anion exchange of polyether compound including 1-methylimidazolium chloride group using potassium iodide

A glass reactor equipped with a stirrer was charged with 5.6 g of the polyether compound obtained in Production Example B, 4.0 g of potassium iodide, 10 mL of methanol, and 10 mL of purified water, and the mixture was stirred at room temperature (25°C) for 30 minutes. After completion of the reaction, the reaction mixture was dried at 50°C for 1 hour under reduced pressure to obtain a solid-liquid mixture. The solid-liquid mixture was dissolved in ethanol, and the solution was filtered to remove an inorganic salt (i.e., insoluble substance). The filtrate was dried at 50°C for 12 hours under reduced pressure to obtain 6.3 g of a yellowish brown viscous liquid substance. The viscous liquid substance was subjected to ¹H-NMR analysis and elemental analysis. It was found that the viscous liquid substance was a polyether compound having an imidazolium structure and including an iodide ion as a counter anion (i.e., the chloride ion of the 1-methylimidazolium chloride group included in each repeating unit of the polyether compound (starting material) and the bromide ion of the 1-methylimidazolium bromide group at the polymerization-initiation terminal were replaced by an iodide ion).

This compound is hereinafter referred to as "polyether compound 1".

### Example 1

### Preparation of electrolyte solution

0.52 g of the polyether compound 1 was weighed, and dissolved in 1 mL of γ-butyrolactone to prepare an electrolyte solution (concentration of polyether compound 1:0.30 mol/L).

### Formation of titanium oxide semiconductor porous film

A titanium oxide paste (used for a low-temperature film-forming process) was applied to the surface of a polyethylene naphthalate film provided with an ITO film (ITO-PEN, sheet resistance: 15 Ω/sq., substrate thickness: 200 µm) (transparent base provided with transparent conductive film), and calcined at 150°C to form a titanium oxide film (average thickness: 5.5 µm). A titanium oxide semiconductor porous film was thus obtained.

### Support of dye

A bis(4-carboxy-4'-tetrabutylammoniumcarboxy-2,2'-bipyridine)diisothiocyanate ruthenium complex ("N719 dye" manufactured by Tateyama Kasei Co., Ltd.) was used as a dye. The transparent base provided with the titanium oxide semiconductor porous film (heated to 40°C) was immersed in an acetonitrile/ethanol/t-butyl alcohol (2:1:1 (volume ratio)) mixed solution (dye concentration: 0.3 mmol/L) for 90 minutes (in a light-blocking environment, with slow shaking). After removing unnecessary dye by washing with dehydrated acetonitrile, the transparent base was air-dried to obtain a solar cell anode.

### Counter electrode

A glass container was charged with 5 g of water, 1 g of ethanol, and 0.0025 g of carbon nanotubes obtained using a super-growth method (i.e., single-walled carbon nanotubes that are obtained using the method disclosed in WO2006/011655, and characterized in that the average diameter (Av) and the standard deviation (σ) of the diameter satisfy 0.60>3σ/Av>0.20, hereinafter referred to as "SGCNT"). The mixture was subjected to an ultrasonic dispersion treatment for 2 hours to obtain a carbon nanotube aqueous dispersion. The aqueous dispersion was applied to the surface of the FTO film of an FTO-glass sheet (sheet resistance: 10 Ω/sq.) to a thickness of 22.9 µm, and dried for 2 hours at a temperature of 22°C and a humidity of 60% to obtain a cathode (counter electrode) on which a catalyst layer (carbon nanotube layer) was formed.

### Assembly (production) of dye-sensitized solar cell element

The anode was placed horizontally so that the titanium oxide semiconductor porous film supporting the dye was situated on the upper side, and a polytetrafluoroethylene resin sheet (thickness: 25 µm) (i.e., spacer) was placed on the anode. The electrolyte solution was slowly dropped onto the titanium oxide semiconductor porous film supporting the dye. The cathode was then placed so that the catalyst layer was situated opposite to the electrolyte solution to obtain a solar cell element.

### Test 1

### Measurement of photoelectric conversion characteristics of dye-sensitized solar cell element

The photoelectric conversion efficiency of the dye-sensitized solar cell element was evaluated at 25°C while applying light (pseudo-sunlight) from a 150 W xenon lamp light source (provided with an AM1.5G filter and an irradiation area measurement mask having a 10×10 mm window) (light intensity: 100,000 lx (100 mW/cm², source meter: "2400 Source Meter" manufactured by Keithley)).

It is preferable that the dye-sensitized solar cell element have a high photoelectric conversion efficiency. The results are shown in Table 1.

### Example 2

### Preparation of electrolyte solution

0.52 g of the polyether compound 1 and 0.00762 g of iodine were dissolved in 1 mL of γ-butyrolactone to prepare an electrolyte solution (concentration of polyether compound 1: 0.30 mol/L). The iodine concentration in the solution was 0.03 mol/L.

A dye-sensitized solar cell element was produced in the same manner as in Example 1, except that the resulting electrolyte solution was used, and the photoelectric conversion efficiency was evaluated in the same manner as described above. The results are shown in Table 1.

### Example 3

### Counter electrode

A dye-sensitized solar cell element was produced in the same manner as in Example 1, except that the counter electrode was produced using 0.0025 g of commercially available single-walled carbon nanotubes ("HiPco (registered trademark)" manufactured by NanoIntegris Inc., average diameter (Av): 1.1 nm, standard deviation (σ) of diameter: 0.067 nm, 3σ/Av=0.18, hereinafter referred to as "CNT") instead of 0.0025 g of SGCNT, and the photoelectric conversion efficiency was evaluated in the same manner as described above. The results are shown in Table 1.

### Example 4

### Synthesis of electrolyte (polyether compound 2)

### Production Example D

### Quaternization of epichlorohydrin unit in copolymer using pyridine

A glass reactor equipped with a stirrer (in which the internal atmosphere had been replaced by argon) was charged with 4.0 g of the oligomer obtained in Production Example A and 8.0 g of pyridine, and the mixture was heated to 100°C, and reacted at 100°C for 48 hours. The reaction mixture was then cooled to room temperature (25°C) to terminate the reaction. The resulting reaction product was dried at 50°C for 120 hours under reduced pressure to obtain 4.6 g of a yellowish brown viscous liquid substance. The viscous liquid substance was subjected to ¹H-NMR analysis and elemental analysis. It was found that the viscous liquid substance was a polyether compound obtained by substituting the chloro group of each epichlorohydrin unit included in the oligomer (starting material) with a pyridinium chloride group, and substituting the bromo group included in the bromomethyl group at the polymerization-initiation terminal with a pyridinium bromide group.

### Production Example E

### Anion exchange of polyether compound including pyridinium chloride group using potassium iodide

A glass reactor equipped with a stirrer was charged with 4.0 g of the polyether compound obtained in Production Example D, 3.0 g of potassium iodide, 10 mL of methanol, and 10 mL of purified water, and the mixture was reacted at room temperature (25°C) for 30 minutes. After completion of the reaction, the reaction mixture was dried at 50°C for 1 hour under reduced pressure to obtain a solid-liquid mixture. The solid-liquid mixture was dissolved in ethanol, and the solution was filtered to remove an inorganic salt (i.e., insoluble substance). The filtrate was dried at 50°C for 12 hours under reduced pressure to obtain 4.5 g of a yellowish brown viscous liquid substance. The viscous liquid substance was subjected to ¹H-NMR analysis and elemental analysis. It was found that the viscous liquid substance was a polyether compound having a pyridinium structure and including an iodide ion as a counter anion (i.e., the chloride ion of the pyridinium chloride group included in each repeating unit of the polyether compound (starting material) and the bromide ion of the pyridinium bromide group at the polymerization-initiation terminal were replaced by an iodide ion). This compound is hereinafter referred to as "polyether compound 2".

### Preparation of electrolyte solution

A dye-sensitized solar cell element was produced in the same manner as in Example 1, except that the electrolyte solution was prepared using 0.52 g of the polyether compound 2 instead of 0.52 g of the polyether compound 1, and the photoelectric conversion efficiency was evaluated in the same manner as described above. The results are shown in Table 1.

### Example 5

### Synthesis of electrolyte (polyether compound 3)

### Production Example F

### Living anionic copolymerization of propylene oxide and epichlorohydrin

A glass reactor equipped with a stirrer (in which the internal atmosphere had been replaced by argon) was charged with 3.22 g of TBAB and 50 mL of toluene, and the mixture was cooled to 0°C. After the addition of a solution prepared by dissolving 1.370 g (1.2 equivalents based on TBAB) of triethylaluminum in 10 mL oftoluene, the mixture was reacted for 15 minutes to prepare a catalyst composition. After the addition of 6.0 g of propylene oxide and 4.0 g of epichlorohydrin to the catalyst composition, the mixture was subjected to a polymerization reaction at 0°C. The viscosity of the solution gradually increased after the initiation of the polymerization reaction. After 12 hours had elapsed, a small quantity of isopropyl alcohol was added to the reaction mixture to terminate the reaction. The resulting reaction mixture was washed with a 0.1 N hydrochloric acid aqueous solution to effect deashing (i.e., a catalyst residue was removed), and then washed with ion-exchanged water. The organic layer was dried at 50°C for 12 hours under reduced pressure to obtain 9.9 g of a colorless and transparent oily substance. The oily substance had a number average molecular weight (Mn) (determined by GPC) of 1,400 and a molecular weight distribution (polystyrene-equivalent value) of 1.36. The oily substance was subjected to ¹H-NMR analysis. It was found that the oily substance included 70.5 mol% of a propylene oxide unit and 29.5 mol% of an epichlorohydrin unit. It was thus confirmed that the oily substance was an oligomer including a propylene oxide unit and an epichlorohydrin unit (i.e., a 21-mer consisting of fifteen propylene oxide units and six epichlorohydrin units (on average)), and including a bromomethyl group at the polymerization-initiation terminal and a hydroxyl group at the polymerization-end terminal.

### Production Example G

### Quaternization of epichlorohydrin unit in copolymer using 1-methylimidazole

A glass reactor equipped with a stirrer (in which the internal atmosphere had been replaced by argon) was charged with 5.0 g of the oligomer obtained in Production Example F and 9.0 g of 1-methylimidazole. The mixture was heated to 100°C, and reacted at 100°C for 72 hours. The reaction mixture was then cooled to room temperature to terminate the reaction. The reaction mixture was poured into a large quantity of ethyl acetate, and the resulting viscous solid was dried at 50°C for 120 hours under reduced pressure to obtain 6.6 g of a yellow powdery solid. The powdery solid was subjected to ¹H-NMR analysis and elemental analysis. It was found that the powdery solid was a polyether compound obtained by substituting the chloro group (chlorine atom) of each epichlorohydrin unit included in the oligomer (starting material) with a 1-methylimidazolium chloride group, and substituting the bromo group (bromine atom) included in the bromomethyl group at the polymerization-initiation terminal with a 1-methylimidazolium bromide group.

### Production Example H

Anion exchange of polyether compound including 1-methylimidazolium chloride group using potassium iodide

A glass reactor equipped with a stirrer was charged with 3.0 g of the polyether compound obtained in Production Example G, 4.3 g of potassium iodide, and 10 mL of purified water, and the mixture was reacted at room temperature (25°C) for 30 minutes. After completion of the reaction, the reaction product was dried at 50°C for 1 hour under reduced pressure. The resulting solid was dissolved in ethanol, and the solution was filtered to remove an inorganic salt (i.e., insoluble substance). The filtrate was dried at 50°C for 12 hours under reduced pressure to obtain 3.3 g of a yellowish brown powdery solid. The powdery solid was subjected to ¹H-NMR analysis and elemental analysis. It was found that the powdery solid was a polyether compound having an imidazolium structure and including an iodide ion as a counter anion (i.e., the chloride ion of the 1-methylimidazolium chloride group included in each repeating unit of the polyether compound (starting material) and the bromide ion of the 1-methylimidazolium bromide group at the polymerization-initiation terminal were replaced by an iodide ion). This compound is hereinafter referred to as "polyether compound 3".

### Preparation of electrolyte solution

0.30 g of the polyether compound 3 was dissolved in 0.5 mL of γ-butyrolactone to prepare an electrolyte solution (concentration of polyether compound 3: 0.30 mol/L). A dye-sensitized solar cell element was produced in the same manner as in Example 1, except that the resulting electrolyte solution was used instead of the electrolyte solution including the polyether compound 1, and the photoelectric conversion efficiency was evaluated in the same manner as described above. The results are shown in Table 1.

### Example 6

### Synthesis of electrolyte (polyether compound 4)

### Production Example I

### Living anionic copolymerization of propylene oxide, epichlorohydrin, and glycidyl methacrylate

A glass reactor equipped with a stirrer (in which the internal atmosphere had been replaced by argon) was charged with 3.03 g of TBAB and 50 mL of toluene, and the mixture was cooled to 0°C. After the addition of a solution prepared by dissolving 1.290 g (1.2 equivalents based on TBAB) of triethylaluminum in 10 mL of toluene, the mixture was reacted at 0°C for 15 minutes to prepare a catalyst composition. After the addition of 4.5 g of propylene oxide, 1.5 g of glycidyl methacrylate, and 3.4 g of epichlorohydrin to the catalyst composition, the mixture was subjected to a polymerization reaction at 0°C. The viscosity of the solution gradually increased after the initiation of the polymerization reaction. After 12 hours had elapsed, a small quantity of isopropyl alcohol was added to the reaction mixture to terminate the reaction. The resulting reaction mixture was washed with a 0.1 N hydrochloric acid aqueous solution to effect deashing (i.e., a catalyst residue was removed), and then washed with ion-exchanged water. The organic layer was dried at 50°C for 12 hours under reduced pressure to obtain 9.9 g of a colorless and transparent oily substance. The oily substance had a number average molecular weight (Mn) (determined by GPC) of 1,500 and a molecular weight distribution (polystyrene-equivalent value) of 1.29. The oily substance was subjected to ¹H-NMR analysis. It was found that the oily substance included 62.1 mol% of a propylene oxide unit, 8.4 mol% of a glycidyl methacrylate unit, and 29.5 mol% of an epichlorohydrin unit. It was thus confirmed that the oily substance was an oligomer including a propylene oxide unit, a glycidyl methacrylate unit, and an epichlorohydrin unit (i.e., a 21-mer consisting of thirteen propylene oxide units, two glycidyl methacrylate units, and six epichlorohydrin units (on average)), and including a bromomethyl group at the polymerization-initiation terminal and a hydroxyl group at the polymerization-end terminal.

### Production Example J

### Quaternization of epichlorohydrin unit in copolymer using 1-methylimidazole

A glass reactor equipped with a stirrer (in which the internal atmosphere had been replaced by argon) was charged with 5.0 g of the oligomer obtained in Production Example I and 9.0 g of 1-methylimidazole, and the mixture was heated to 60°C. The mixture was reacted at 60°C for 120 hours, and cooled to room temperature to terminate the reaction. The reaction mixture was poured into a large quantity of ethyl acetate, and the resulting viscous solid was dried at 50°C for 120 hours under reduced pressure to obtain 6.5 g of a brown powdery solid. The powdery solid was subjected to ¹H-NMR analysis and elemental analysis. It was found that the powdery solid was a polyether compound obtained by substituting the chloro group (chlorine atom) of each epichlorohydrin unit included in the oligomer (starting material) with a 1-methylimidazolium chloride group, and substituting the bromo group (bromine atom) included in the bromomethyl group at the polymerization-initiation terminal with a 1-methylimidazolium bromide group.

### Production Example K

### Anion exchange of polyether compound including 1-methylimidazolium chloride group using potassium iodide

A glass reactor equipped with a stirrer was charged with 3.0 g of the polyether compound obtained in Production Example J, 4.5 g of potassium iodide, and 10 mL of purified water, and the mixture was reacted at room temperature (25°C) for 30 minutes. After completion of the reaction, the reaction mixture was dried at 50°C for 1 hour under reduced pressure to obtain a solid. The solid was dissolved in ethanol, and the solution was filtered to remove an inorganic salt (i.e., insoluble substance). The filtrate was dried at 50°C for 12 hours under reduced pressure to obtain 3.4 g of a brown powdery solid. The powdery solid was subjected to ¹H-NMR analysis and elemental analysis. It was found that the powdery solid was a polyether compound having an imidazolium structure and including an iodide ion as a counter anion (i.e., the chloride ion of the 1-methylimidazolium chloride group included in each repeating unit of the polyether compound (starting material) and the bromide ion of the 1-methylimidazolium bromide group at the polymerization-initiation terminal were replaced by an iodide ion). This compound is hereinafter referred to as "polyether compound 4".

### Preparation of electrolyte solution

0.30 g of the polyether compound 4 was dissolved in 0.5 mL of γ-butyrolactone to prepare an electrolyte solution (concentration of polyether compound 4:0.30 mol/L). A dye-sensitized solar cell element was produced in the same manner as in Example 1, except that the resulting electrolyte solution was used instead of the electrolyte solution including the polyether compound 1. The dye-sensitized solar cell element was held at 80°C for 5 hours to crosslink the polyether compound 4. The photoelectric conversion efficiency of the resulting dye-sensitized solar cell element was evaluated as described above. The results are shown in Table 1.

### Comparative Example 1

### Preparation of electrolyte solution

1,3-Methylpropylimidazolium iodide (hereinafter abbreviated as "MPImI") (electrolyte) was dissolved in γ-butyrolactone so that the concentration of MPImI was 0.30 mol/L to prepare an electrolyte solution.

A dye-sensitized solar cell element was produced in the same manner as in Example 1, except that the resulting electrolyte solution was used, and the photoelectric conversion efficiency was evaluated in the same manner as described above. The results are shown in Table 1.

### Comparative Example 2

### Counter electrode

A platinum (Pt) layer (catalyst layer) was formed on the surface of the FTO film of an FTO-glass sheet (sheet resistance: 0.16 Ω/sq.) using a sputtering method to obtain a cathode (counter electrode).

A dye-sensitized solar cell element was produced in the same manner as in Example 1, except that the resulting counter electrode was used, and the photoelectric conversion efficiency was evaluated in the same manner as described above. The results are shown in Table 1.

**TABLE 1**

| | Example | | | | | | Comparative Example | |
|---|---|---|---|---|---|---|---|---|
| | 1 | 2 | 3 | 4 | 5 | 6 | 1 | 2 |
| Electrolyte compound | Polyether compound 1 | Polyether compound 1 | Polyether compound 1 | Polyether compound 2 | Polyether compound 3 | Polyether compound 4 | MPImI | Polyether compound 1 |
| Molar concentration (mol/L) of electrolyte compound | 0.3 | 0.3 | 0.3 | 0.3 | 0.3 | 0.3 | 0.3 | 0.3 |
| Amount of iodine | 0 | 0.03 | 0 | 0 | 0 | 0 | 0 | 0 |
| Counter electrode material | SGCNT | SGCNT | CNT | SGCNT | SGCNT | SGCNT | SGCNT | Pt |
| Photoelectric conversion efficiency (%) | 2.98 | 3.84 | 2.90 | 2.91 | 3.05 | 2.99 | 2.68 | 2.28 |

The dye-sensitized solar cell elements of Examples 1 to 6 (in which a polyether compound that falls within the scope of the invention was used as the electrolyte, and the nano-carbon material was used to form the catalyst layer of the counter electrode) exhibited excellent photoelectric conversion efficiency.

The photoelectric conversion efficiency of the dye-sensitized solar cell element of Example 2 (in which iodine was added to the electrolyte layer) was significantly higher than that of the dye-sensitized solar cell element of Example 1.

The dye-sensitized solar cell element of Example 6 (in which the polyether compound 4 including a crosslinkable group was used, and the polyether compound 4 was crosslinked (i.e., the electrolyte layer gelled)) is effective for preventing volatilization of the solvent, and leakage from the electrolyte layer due to breakage of the dye-sensitized solar cell element.

The dye-sensitized solar cell element of Comparative Example 1 (in which the nano-carbon material was used to form the catalyst layer of the counter electrode, but the ionic liquid was used as the electrolyte), and the dye-sensitized solar cell element of Comparative Example 2 (in which a polyether compound that falls within the scope of the invention was used as the electrolyte, but platinum was used to form the catalyst layer of the counter electrode), exhibited insufficient photoelectric conversion efficiency.

## Claims

1. A dye-sensitized solar cell element comprising a semiconductor electrode that comprises an electrode substrate, and a metal oxide semiconductor porous film that is provided on the electrode substrate and supports a dye, a counter electrode that is disposed opposite to the semiconductor electrode, and an electrolyte layer that is provided between the semiconductor electrode and the counter electrode, the counter electrode comprising a nano-carbon material, and the electrolyte layer comprising a polyether compound that comprises a repeating unit represented by a formula (1), 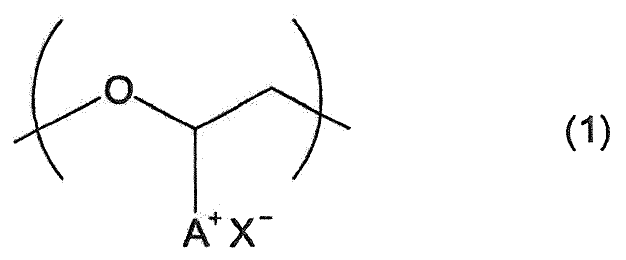 wherein A⁺ is a group having an onium ion structure that comprises a cationic nitrogen atom, and X⁻ is a counter anion.

2. The dye-sensitized solar cell element according to claim 1, wherein the nano-carbon material is carbon nanotubes.

3. The dye-sensitized solar cell element according to claim 2, wherein the carbon nanotubes are **characterized in that** an average diameter (Av) and a standard deviation (σ) of a diameter satisfy 0.60>3σ/Av>0.20.

4. The dye-sensitized solar cell element according to any one of claims 1 to 3,
wherein the electrolyte layer comprises the polyether compound that comprises the repeating unit represented by the formula (1) wherein the counter anion represented by X⁻ is an iodide ion.

5. The dye-sensitized solar cell element according to any one of claims 1 to 4, wherein the electrolyte layer comprises the polyether compound that comprises the repeating unit represented by the formula (1) wherein the group represented by A⁺ has an onium ion structure having an imidazolium ring structure.
